# EUROPEAN PATENT APPLICATION

(11) **EP 2 696 193 A1**
(43) Date of publication of application: **12.02.2014**
(21) Application number: 13179218.6
(22) Date of filing: 05.08.2013
(51) Int. Cl.: G01N 21/84

(54) **Assay detection systems and methods**

(30) Priority: 06.08.2012 US 201261680067 P
(71) Applicant: Wheeler, Andrew, Saco, ME 04072 (US); Turmel, Christoper, Portland, ME 04103 (US)
(72) Inventor: Wheeler, Andrew, Saco, ME 04072 (US); Turmel, Christoper, Portland, ME 04103 (US)
(74) Representative: Lee, Nicholas John

(57) **Abstract**

Described herein are methods and devices for detecting one or more targets in a sample using an assay device (14), optical illumination (12), and optical detection (16).

## Description

### BACKGROUND

Lateral flow assay devices are used to determine the presence or absence of one or more targets in samples. Instruments, sometimes referred to as readers, can be used to determine the result of an assay performed with a lateral flow device.

### SUMMARY

The present invention relates to a method for detecting one or more targets in a sample using an assay device, optical illumination, and optical detection. A surface of the assay device is illuminated with light and a portion of the light passes through the assay device and exits an opposite surface of the assay device. A detector detects the light that has passed through and exited the assay device. A processor determines the presence, absence, or amount of target(s) based upon the detected light. The sample may be whole blood or a portion thereof.

Another embodiment relates to an assay device, such as a lateral flow assay device, comprising (a) an amount of conjugate particulates having a V*O.D. of at least about 30 and (b) a detection zone. The assay device may exclude a scrub zone that substantially reduces a number of the conjugate particulates that reach the detection zone.

Another embodiment relates to a method of performing an assay, comprising flowing a sample along an assay device, such as a lateral flow device, toward a detection zone of the lateral flow device. The sample comprises an amount of conjugate particulates having a V*O.D. of at least about 30.

### BRIEF DESCRIPTION OF FIGURES

Figure 1 depicts an assay system 10 configured to determine the presence, absence, or amount of one or more targets present in a sample
Figure 2 depicts an image of a Back lit Flu A/B as described in Example 1.
Figure 3 depicts an image of a Reflective Light Flu A/B as described in Example 1.
Figure 4 depicts a pixel analysis of the Figure 3 image as described in Example 1.
Figure 5 depicts a pixel analysis of the Figure 2 image as described in Example 1.
Figure 6 depicts a reflective green light whole blood as described in Example 2. The lateral flow strip is the dark vertical line in the lower center of the bright region of the image.
Figure 7 depicts a back lit green light whole blood as described in example 2. The lateral flow strip is the vertical bright region at the center of the bright region at the right hand portion of the image.

### DETAILED DESCRIPTION

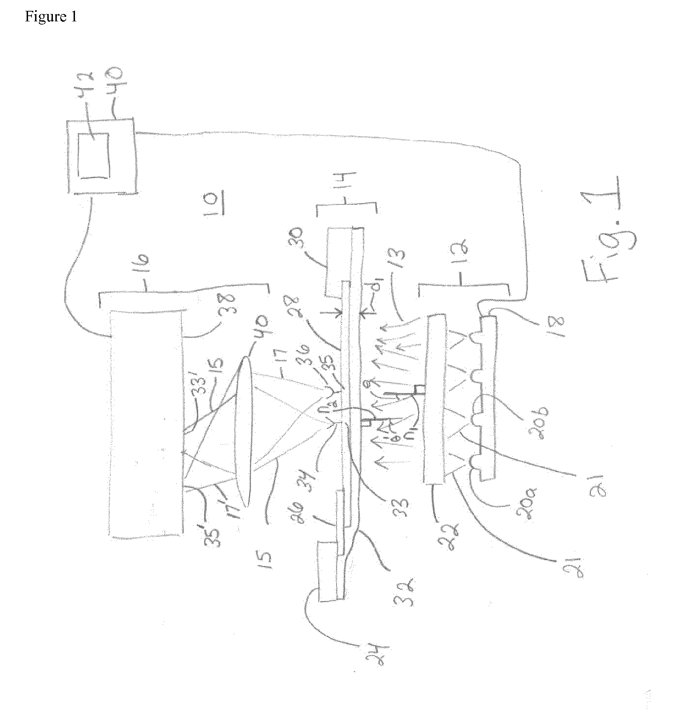

With reference to figure 1, an assay system 10 is configured to determine the presence, absence, or amount of one or more targets present in a sample. Assay system 10 includes a light source system 12, an assay device 14, a detector system 16, and a processor system 40 in communication with light source system 12.

In use, a sample (which may be combined with one or more reagents) is applied to assay device 14. The Light source system 12 illuminates assay device 14 with illuminating light 21. Illuminating light 21 passes through a diffuser 22 to produce diffuse light 13. A portion of diffuse light 13 passes through assay device 14 (the resulting transmitted light is shown as transmitted light 15 and 17) and is detected by detector 38 of detector system 16. The amount of transmitted light 15, 17 that passes through assay device 14 relative to the amount of diffuse light 13 is indicative of the presence, absence, or amount of target(s) in the sample applied to assay device 14. Processor 40 receives data indicative of the detected transmitted light 15, 17 from detector system 16 and processes the data to produce analyzed data indicative of the target(s) to be determined. A screen 42 of processor system 40 displays information related to the analyzed data.

Light source system 12 includes a light source 18 and a diffuser 22. Light source 18 includes at least one, and typically several, emitter(s) 20a, 20b. Emitters 20a, 20b are LED's emitting illuminating light 21 having a peak wavelength of about 520 nm. Illuminating light 21 is incident upon diffuser 22 which emits light as diffuse light 13. Diffuse light 13, typically diffuse in the sense that it is essentially free of spatial intensity variations associated with light emitters 20a, 20b, is composed of light rays having a substantially random distribution of angles θ with respect to an axis n1 oriented normal to diffuser 22, and/or is composed of light rays having a substantially random distribution of angles θ' with respect to an axis n2 oriented normal to a major surface of assay device 14 illuminated by diffuse light 13. Thus, diffuse light 13 typically illuminates assay device 14 with a substantially random distribution of angles of incidence with respect to assay device 14.

Assay device 14 is a lateral flow strip including a sample application pad 24, a conjugate pad 26, a porous membrane 28, a waste reservoir 30, and an impermeable backing 32. Porous membrane 28 is typically a nitrocellulose membrane. Porous membrane 28 includes one or more detection zones 33 and one or more control zones 35. Detection zone 33 includes a binding agent 34 useful in the determination of a target(s) and control zone 35 includes a binding agent 36 useful in determining the proper functioning of the strip. Conjugate pad 26 includes a particulate conjugate comprising a binding agent useful in the determination of the target(s). For example, in a sandwich assay configuration, the particulate conjugate may include an antibody specific to one epitope of the target whereas the binding agent 34 of detection zone 33 is specific to a second, different epitope of the target that permits simultaneous binding of the two binding agents. In a competitive assay configuration, the particulate conjugate may, for example, include (a) a conjugated species that mimics an epitope of the target or (b) a binding agent that binds an epitope of the target whereas the control zone includes, respectively, (a) a binding agent that binds the target and the conjugated species of the particulate conjugate (but not both simultaneously) or (b) a bound species that mimics an epitope of the target.

The particles of the conjugate particulates are configured to absorb and/or scatter light emitted by light source system 12. In an exemplary embodiment, light source system 12 emits light of about 520 nm, e.g., within about 30 nm of 520 nm, and the particles of the conjugate particles are gold particles which have an absorption maximum of about 535 nm.

In manufacturing assay device 14, the conjugate particulates are typically applied as an aqueous suspension, which may include reagents (such as sugar) in addition to the conjugate particulates. For example, the aqueous suspension may be applied using a spotting device which applies a known volume of suspension per unit distance across a width of assay device 14. In embodiments, the application rate of suspension is at least about 0.5 µL cm⁻¹, at least about 1.0 µL cm⁻¹, at least about 2 µL cm⁻¹, or at least about 3 µL cm⁻¹. In embodiments, the application rate of suspension is about 10 µL cm⁻¹ or less, about 7.5 µL cm⁻¹ or less, or about 5 µL cm⁻¹ or less are applied to assay device 14. In exemplary embodiments, the strip has a width of between about 3 and 15 mm, e.g., a width of about 5 mm, about 7.5 mm, or about 1 cm.

The amount (e.g., total number) of conjugate particulates applied to (or present on) assay device 14 may be quantified based on, e.g., the product of (i) the total volume of suspension in µL (V) applied to the assay device and (ii) the optical density per cm (O.D.) of the conjugate particulates of the suspension. The O.D. of the conjugate particulates of the suspension is typically determined at a wavelength of peak absorption of the conjugate particulates in a spectral region corresponding to a wavelength of light detected by the detector, e.g., at about 535 nm for the gold particles discussed above, and/or at a wavelength of peak emission (or detection) of light source system 12, e.g., about 520 nm for light emitters 20a, 20b.

The V*O.D. of the conjugate particulates of assay device 14 may also be determined after the conjugate particulates have been applied to the assay device by solubilizing the conjugate particulates as a suspension in a known volume of water and determining the O.D. of the suspension.

In embodiments, the V*O.D. of the conjugate particulates of assay device 14 (whether directly determined from the suspension applied to the assay device during manufacture or determined by solubilizing the applied conjugate particulates) is at least about 20, at least about 30, at least about 50, at least about 75, at least about 90, at least about 100. In embodiments, the product V*O.D. of the conjugate particulates of assay device 14 is about 200 or less, about 150 or less, or about 125 or less.

Detector system 16 includes a lens 40 and a two dimensional detector 38 such as a charge coupled device. Lens 40 collects transmitted light 15, 17 from assay device 14 and forms images 33', 35' of detection zone 33, control zone 35, and adjacent portions of assay device 14 on detector 38.

In use, a sample (which may or may not have been pre-treated and may or may not include one or more reagents) is applied to sample application pad 24 of assay device 14. The sample wicks along assay device 14 and mobilizes particulate conjugates of the conjugate pad 26 and carries the particulate conjugates along porous membrane 28. As the sample/particulate mixture migrates along porous membrane 28, particulate conjugates are captured in the detection zone(s) and control zone in an amount that depends on the presence, absence or amount of target and the format of assay (e.g., sandwich or competitive). Particulate conjugates captured in a detection or control zone are referred as "bound". Such bound particulate conjugates may be bound specifically as by a binding agent such as an antibody or antigen present in the detection zone. Particulate conjugates that are present in regions of assay device 14 and so are not captured in a detection or control zone are referred to as "unbound". Such unbound particulates may be migrating along porous membrane 28 and/or may be non-specifically absorbed to permeable membrane 28.

When a sufficient amount of conjugate particulates has bound at the detection and/or control zones, light source system 12 illuminates an outer surface impermeable backing 32 of assay device 14 with diffuse light 13. A portion of diffuse light 13 passes through impermeable backing 32, through porous membrane 28 and exits an outer surface of assay device 14 on the opposite side from the outer surface of impermeable backing 32. As diffuse light 13 passes through assay device 14, a portion of the light interacts with particles of the particulate conjugates present in the detection zones 33,35. Detector system 16 detects light that has passed through the assay device 14 including through detection zones 33,35. As the amount of bound particles increases, the amount of light present in detection zone images 3 3',3 5' decreases as compared to the amount of light present in images of regions of the assay device adjacent to detection zones 33,35. Processor system 40 determines the presence, absence, and/or amount of target(s) based on the difference in the amount of light present in the images of the detection zones and in the images of the adjacent regions of the lateral flow strip.

As discussed above, the steps of illuminating assay device 14 and detecting the transmitted light 15, 17 may be performed when a sufficient amount of conjugate particulates has bound at the detection and/or control zones. A sufficient amount means an amount sufficient (a) to provide a positive or negative assay result and/or to determine an amount of target(s) present in the sample based on conjugate particulates bound in the detection zone(s) 33 and/or (b) to verify the proper functioning of the device based on conjugate particulates bound in the control zone(s) 35. The steps of illuminating may also be performed before such amount has been reached so as, for example, to permit tracking the assay progress, and/or after such amount has been reached.

In preferred embodiments, the steps of illuminating assay device 14 and detecting the transmitted light 15, 17 are performed while sample and unbound conjugate particulates continue to flow along porous membrane 28 in the region of the detection zone(s) 33 and control zone 35 of assay device 14. For example, the steps of illuminating and detecting are typically performed before the flow of liquid has ceased and before the permeable membrane 28 has dried in the region of the detection zone(s) 33 and control zone 35 of assay device 14. In alternative embodiments, the steps of illuminating assay device 14 and detecting the transmitted light 15, 17 are performed after flow has ceased but while the assay device remains wet due to presence of liquid sample in the proximity of the detection zone and adjacent areas. In still other embodiments, the steps of illuminating assay device 14 and detecting the transmitted light 15, 17are performed when assay device 14 is dry in the proximity of the detection zone and adjacent areas.

In embodiments, light source system 12 is arranged so that diffuse light 13 emitted from light source system 12 is aligned with (on average) the optical axis of detector system 16. Diffuse light 13 may have a random distribution of angles θ about the optical axis of detector system 16. Diffuse light 13, which is normal (on average) to the surface of assay device 14, therefore passes through assay device 14 before reaching detector system 16. The presence of accumulated particles, e.g., bound, at a detection zone 33 absorb diffuse light 13, resulting in a region that is dark (i.e., receives lower light intensity) on detection system 16 as compared to adjacent regions of assay device 14 in which bound particles are absent. The differential intensity of diffuse light 13 which interacts with assay device 14 and reaches detector system 16 as transmitted light 15, 17 is indicative of the amount of particles accumulated, e.g., bound, at a detection zone 33.

Although light emitters 20a, have been described as LED's, other light sources may be used. For example, incandescent, atomic emission, and laser sources may be used. Although light sources 20a have been described as emitting illuminating light 21 having a wavelength of 520 nm, other wavelengths may be used. Typically, the maximum wavelength of the light from the light source is about 800 nm or less, e.g., about 750 nm, or less, about 700 nm or less, about 650 nm, or less, about 600 nm or less, about 575 nm or less, about 550 nm or less, or about 530 nm or less. Light from the light source may have a distribution of wavelengths. In embodiments, the FWHM of light from the light source is at least about 25 nm, at least about 50 nm, at least about 75 nm, at least about 100 nm , at least about 150 nm, or at least about 250 nm.

Although illuminating light 21 of light source system 12 is shown as being diffuse, other forms of irradiation may be used as alternatives to or in combination with irradiation by diffuse light 13. For example, light source system 12 may be configured to emit collimated light or light that diverges or converges as it approaches assay device 14.

Particles of the particulate conjugate are typically colloidal. The particles may be colloids of metals, such as gold or selenium. In embodiments, the particles of the particulate conjugate include latex particles. In other embodiments, the particles of the particulate conjugates are essentially free of latex particles. Particles of the particulate conjugate may have a mean diameter of about 300 nm or less, about 250 nm or less, about 200 nm or less, about 150 nm, or less, about 100 nm or less, or about 75 nm or less. In embodiments, the particles are gold particles having a diameter of about 60 nm. In embodiments, particles of the particulate conjugate may have a mean diameter of at least about 25 nm, at least about 30 nm, at least about 50 nm, at least about 100 nm, at least about 150 nm, at least about 200 nm, at least about 300 nm, at least about 400 nm, or at least about 450 nm. Particles of the particulate conjugates may have an absorption spectrum of light with a maximum of about 750 nm or less, about 700 nm, or less, about 650 nm, or less, or about 600 nm or less. In embodiments, the particles have an absorption maximum of about 540 nm.

Although assay device 14 is described as using particulate conjugates, other forms of detectable labels may be used. For example, enzymatic labels or dyes may also be used. In addition, labels or reactants, e.g., enzymes, may be used in place of or in combination with conjugates.

Assay device 14 is described as including a conjugate pad 26. In other embodiments, conjugate particulates (or other label) are not dried down on any portion of assay device 14 but are applied in liquid form during use. For example, the conjugate particulate (or other label) may be applied in solution with the sample or may be applied as a separate solution. The same parameters for O.D./cm and other parameters of the particulates discussed above may be employed in this embodiment.

In embodiments, assay device 14 includes a "scrub" line or region along the sample flow path to reduce the background from unbound conjugate particulates. In other embodiments, the flow path of assay device 14 excludes a scrub line or region that reduces the number of conjugate particulates reaching the detection zone(s) by at least about 30%, by at least about 25%, by at least about 15%, by at least about 7.5%, by at least about 2.5%, as compared to the assay device without such a scrub line. For example, the flow path of assay device 14 may exclude a scrub line or region that provides essentially any reduction in the number of conjugate particulates reaching the detection zone(s).

Examples of scrub lines are described, for example, in U.S. Patent No. 7,718,375, which is incorporated herein by reference in its entirety.

Although detector system 16 is shown including a lens 40, other imaging optics such as a mirror(s) may be used in place of or in addition to a lens.

Assay system 10 has been illustrated including a detector system 16. Assay device 14, however, may be visually read without a detector system. In embodiments, a user applies a sample to assay device 14 and positions the assay device so that light from light source system 12 irradiates a surface of the assay device, passes through the assay device, and is then observed by the user. Light transmitted through the assay device is absorbed by the bound conjugate in respective detection zones 33, which appear as "enhanced" dark bands, providing greater visual clarity than would be observed if the light from the light source was reflected from the strip. In embodiments, light source system 12 is a diffuser light box illuminator that can be used to enhance visual examination of a lateral flow strip. A user places a major surface, e.g., a surface of an impermeable backing 32, onto a panel of the light box and reads the result of the assay.

Any features of cassettes and instruments described in the '485 application and the operation and use may be implemented in or with assay system 10. For example, the assay device 14 of assay system 10 may be configured with a cassette having a valve assembly as described in the '485 Application. The assay system 10 may include other features of instruments described in the '485 such as, for example, a stepper motor and software to operate the valve assembly. Accordingly, the '485 application, attached hereto as Exhibit A, is incorporated herein and is considered part of the present disclosure.

Although assay system 10 is shown in use with a lateral flow strip (assay device 14), other types of assay devices may be used. Typically, the assay device is a device that can transmit at least a portion of light incident thereupon and includes a detection region that changes color and/or absorbance in response to the presence, absence, or amount of a target applied to the assay device.

Samples useful for testing using assay system 10 include, for example, bodily fluids, such as whole blood, plasma, serum, urine, sputum, mucous, semen, cerebrospinal fluid, tear fluid, amniotic fluid and saliva or portions thereof. The samples may be combined with reagents, such as a buffer or lysing agent, before or after adding to the assay device 14 of assay system 10. A mixture that results from combining a sample, e.g., blood, urine, saliva, mucous, semen, cerebrospinal fluid, tear fluid, amniotic fluid and sputum, or portions thereof, with one or more reagents, e.g., sugars, lysing agents, buffers, or diluents, is still referred to as a sample. The sample may have a substantial absorption coefficient at the central wavelength of illuminating light 21 emitted by the light source system 12.

### EXEMPLIFICATIONS

The invention will be further described with reference to the following non-limiting examples. It will be apparent to one skilled in the art that many modifications may be made to the embodiments described below without departing from the scope of the invention. It is to be understood that these examples are provided by way of illustration only and should not be considered limiting in any way.

### Example 1:

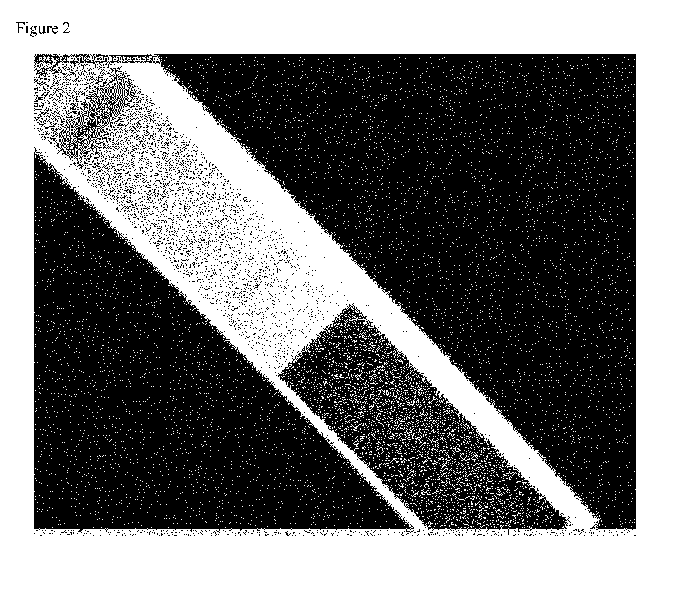

A lateral flow strip including a conjugate pad and nitrocellulose strip was laminated to a clear impermeable backing material. The conjugate pad included particulate conjugate in the form of gold particles (average diameter = 60 nm) including antibodies to influenza virus antigens. A positive control solution was applied to the conjugate pad. After 15 minutes (the end point of the assay), the exposed side of the impermeable backing material was illuminated with diffuse green light having a central wavelength of 520 nm (a 520nm back lit Diffuse L.E.D. system). A digital camera was used to detect light transmitted by the lateral flow strip, i.e., the camera imaged the nitrocellulose strip and detected light that had been emitted by the light source and passed the through the impermeable backing material and then through the nitrocellulose strip before reaching the detector. Figure 2 depicts the resulting back lit (transmitted light) image. Bright light adjacent the lateral flow strip in Figure 2 is light emitted by the light source that has not passed through the lateral flow strip.

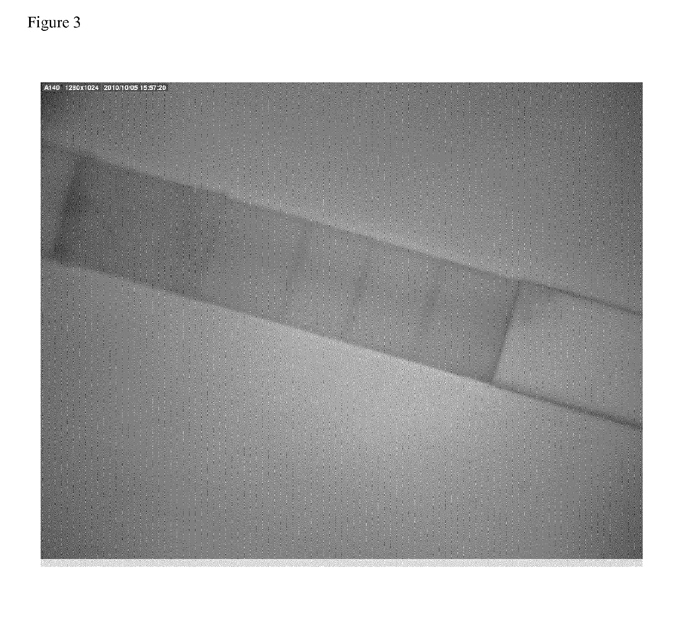

An opaque white backing material was then affixed to the back of the impermeable backing material of the lateral flow strip described above. The lateral flow strip was illuminated with ambient lighting and the digital camera was used to detect light reflected by the lateral flow strip, i.e., the camera imaged the nitrocellulose strip and detected light that had been emitted by the light source incident upon the nitrocellulose strip and that had been reflected by the nitrocellulose. Figure 3 depicts the resulting front lit (reflective light) image. (For the images shown in Figures 2 and 3, each image was imported into software on the PC (Image Pro Plus) and the green channel was extracted from each image).

In both Figures 2 and 3, dark lines oriented perpendicularly to the long axis of the lateral flow strip respectively represent detection zones for flu A and for flu B and a control zone. In Figure 3 (front lit / reflective light) a distinct dark "streak" caused by unbound gold particulates runs parallel to the long axis of the lateral flow strip, having greatest density towards the centre of the lateral flow strip. The streak can be seen to extend between each of the detection zones which are orthogonal to the long edge of the lateral flow strip. In Figure 2 (back lit / transmitted light) the "streak" caused by unbound gold is not present.

Measurement of the transmitted light, as compared to the reflected light, effectively reduces the absorbance of unbound particulate conjugates adjacent the detection zone as compared to the absorbance of bound particulate conjugates present in the detection zone. Thus, the relative and/or absolute difference between (a) the background absorbance of unbound particulate conjugates adjacent the detection or control zones and (b) the signal absorbance of bound particulate conjugates in the detection or control zone is larger in transmitted light mode as compared to reflected light mode.

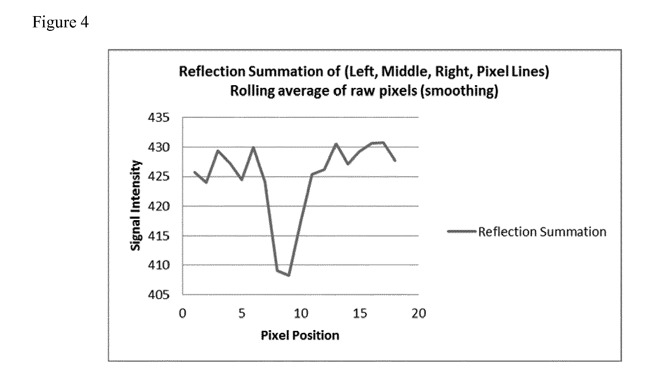

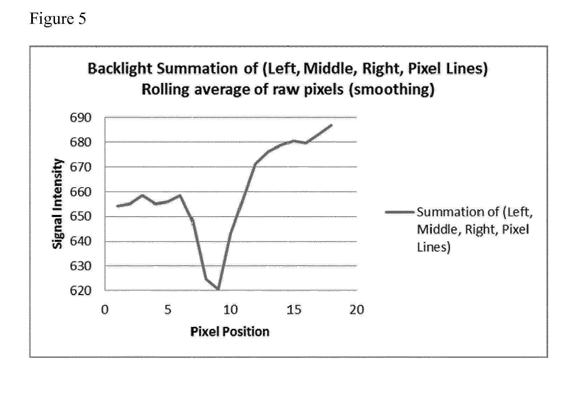

Figure 5, which shows an intensity profile for transmitted light, illustrates a sharper and larger reduction in detected intensity corresponding to the lateral flow strip as compared to the intensity profile for reflected light (Figure 4). Consequently the transmission mode gives rise to a reduction in the %CV of the signal intensity across the full width of the lateral flow strip, which can be visualized, for example, by a change in pixel intensity across the width of the lateral flow strip when imaged using a camera (such as a digital camera based on a CCD or CMOS sensor). A benefit of which is to increase assay sensitivity and reduce limit of detection. The absence of the streak in Figure 2 increases the contrast between each detection zone (control zone) and adjacent portions of the lateral flow strip as compared to the reflection mode image of Figure 3. Accordingly, the back lit configuration is expected to produce heightened sensitivity and reduced background.

In order to see if a digital analysis of the same image would provide further enhancement, the line profile tool on image pro plus was used to extract pixel intensity information. For this analysis, only the middle test line, i.e., at the middle detection zone was examined. Results:
1) The back lit image provides much smoother background (area before and after the line peak) corresponding to the background produced by areas of the lateral flow strip adjacent to the detection zone (test line).
2) The back lit image provides a 2x signal to noise improvement as well as lower %CV in signal across the width of the strip.
3) The back lit image provides significant improvement with %CV in pixel intensity across the width of the strip.

| Data Chart 1: Analysis of Reflective light Flu A/B | | |
|---|---|---|
| Reflective Light Image Analysis | | |
| Whole Strip Avg (Left, Middle and Right Lines) | | |
| Background Before Line Peak | | |
| Avg | STD | %CV |
| 427 | 4.075 | 1.0% |
| Background After Line Peak | | |
| Avg | STD | %CV |
| 429 | 4.690 | 1.1% |
| Avg total background | | |
| 428 | | |
| Line peak Avg (Left, Middle and Right Lines) | STD | %CV |
| 408 | 5.217 | 1.3% |
| | | |
| Signal Avg Left, Middle and Right Lines (Background minus peak) | STD | %CV |
| 20 | 2.1 | 11% |

| Data Chart 2: Analysis of Back light Flu A/B | | |
|---|---|---|
| 520nm Back lit Image Analysis | | |
| Whole Strip Avg (Left, Middle and Right Lines) | | |
| Background Before Line Peak | | |
| Avg | STD | %CV |
| 656 | 1.181 | 0.2% |
| Background After Line Peak | | |
| Avg | STD | %CV |
| 681 | 1.892 | 0.3% |
| Avg total background | | |
| 669 | | |
| Line peak Avg (Left, Middle and Right Lines) | STD | %CV |
| 620 | 2.203 | 0.4% |
| Signal Avg Left, Middle and Right Lines (Background minus peak) | STD | %CV |
| 48 | 2.3 | 5% |

### Example 2: Removal of Whole Blood Background

Example 2 describes experiments to determine if the back lit orientation could reduce background and improve sensitivity with samples such as whole blood, which is a very dark liquid.

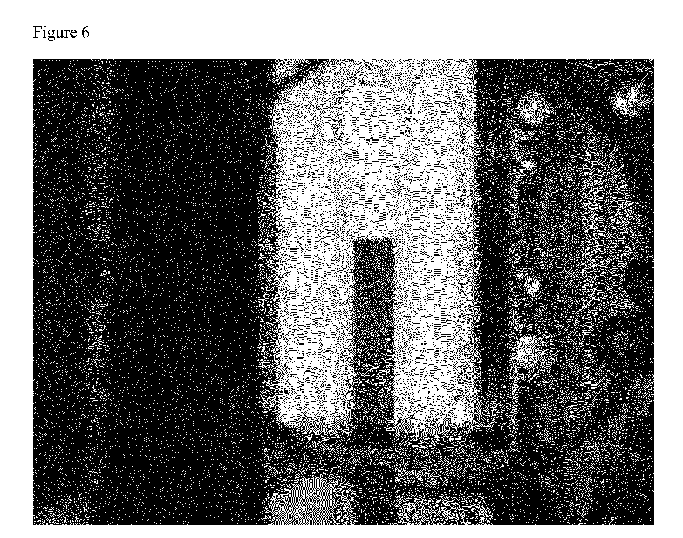

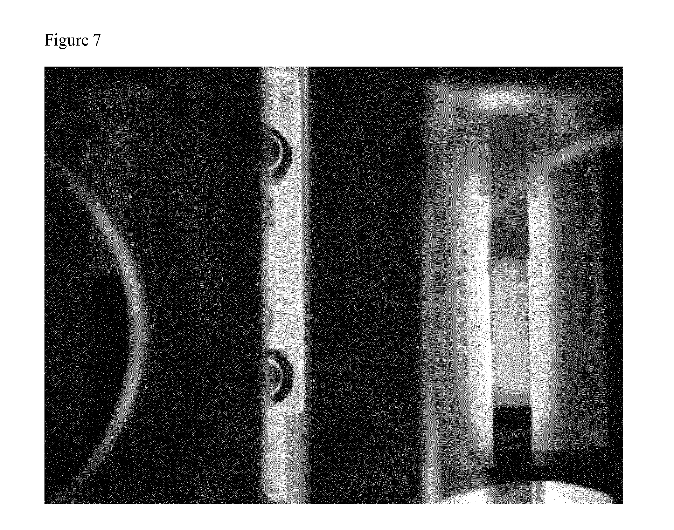

In this case, 50uL whole horse blood was obtained and added to 50uL of a Binax Malaria Reagent A buffer. When then allowed this mixture to flow up a lateral flow strip. The backlit strip was on clear plastic backing and the reflective strip had a white label fixed to the back. After 5 minutes of flow, an image of both strips was taken. Surprising, the background from the blood with the back lit 520nm light was significantly reduced. It is clear to see from these images that the test lines are more easily visible with the back lit and once again the "streaking" in the center has vanished. Figure 6 illustrates an image obtained with reflective light and Figure 7 illustrates an image obtained with back lit orientation as described in Example 1. The same type of pixel analysis was done on these images as well. There are two gold lines on the strip and the backlit one detects them both.

### Example 3: Analysis of urine sample

A sample of urine is analyzed for the presence chorionic gonadotrophin (hCG) to establish whether improvement in signal resolution could be achieved by illuminating the assay device from the reverse side.

A sample of urine from a pregnant female is obtained. This sample is applied to the reagent zone of an assay device to reconstitute dried particles comprising a gold sol having a mean particle diameter of about 60 nm and an anti-hCG antibody. The sample reconstitutes the dried particles to form a first mixture. The sample mixture then migrates along the assay device toward the detection zone. The hCG-particle complexes accumulate at the detection zone (e.g., are bound) to produce a visible line. Particles within the detection zone accumulate due to formation of immuno-complexes resulting from capture of hCG-particle complexes by an antibody immobilized in the detection zone.

When the assay device is illuminated and visualized from the surface on which the detection zone was deposited (that is to say light is reflected off the surface on which the detection zone was present), it is possible to observe a faint smear of unbound particulate conjugates streaming along the assay device (as depicted in Figure 3).

When the assay device is illuminated from the reverse surface (the opposite surface from which the assay device is observed) such that light is transmitted through the assay device to a detector, a significant enhancement in the contrast of the detection zone occurs. Those particulate conjugates which are non-specifically attached to the surface of the assay device in regions of the assay device adjacent to the detection zone (i.e., unbound particulate conjugates) are no longer detectable. Consequently, the relative and absolute difference between the absorbance of particulate conjugates bound in the detection zone and the absorbance of particulate conjugates unbound in adjacent areas of the assay device is increased in the transmission mode as compared to the reflection mode. Accordingly, visualization of the assay device using transmission illumination, with acquisition of an optical image from the opposite side to the illuminator, provided an enhanced signal, permitting the detection of lower hCG concentrations than in reflection mode visualization.

### EQUIVALENTS

Those skilled in the art will recognize, or be able to ascertain using no more than routine experimentation, many equivalents to the specific embodiments of the invention described herein. It is, therefore, to be understood that the foregoing embodiments are presented by way of example only and that, within the scope of the appended claims and equivalents thereto, the invention may be practiced otherwise than as specifically described and claimed.

## Claims

1. A method for detecting a target, comprising:
applying a sample to an assay device;
illuminating a surface of the assay device with light;
detecting light that has been transmitted through the assay device; and
determining the presence, absence, or amount of a target based on the detected light.

2. The method of claim 1 wherein the light comprises light emitted from a light emitting diode, an incandescent light source, an atomic emission light source, a laser light source.

3. The method of claims 1 or 2 wherein the light has a wavelength from about 800nm to about 25nm.

4. The method of any preceding claim wherein the light has a wavelength of about 800 nm or less, e.g., about 750 nm, or less, about 700 nm or less, about 650 nm, or less, about 600 nm or less, about 575 nm or less, about 550 nm or less, or about 530 nm or less.

5. The method of any preceding claim wherein the light has a wavelength of at least about 25 nm, at least about 50 nm, at least about 75 nm, at least about 100 nm, at least about 150 nm, or at least about 250 nm.

6. The method of any preceding claim wherein the wavelength of light is 520nm, and wherein the light source is a green LED.

7. The method of any preceding claim wherein detecting transmitted light comprises using a CMOS array, a CCD array, a photodiode, a photographic paper, a photomultiplier, a photoresistor.

8. The method of any preceding claim where determining the presence, absence or amount of a target comprises analyzing an energy profile of transmitted light, determining a signal intensity coincident with a capture line disposed an said assay device and converting signal intensity to a value indicative of the amount of target captured.

9. The method of claim 8 further comprising determining a component of transmitted light attributable to non-specific interaction of sample components with the assay device and modulating the signal attributed to specific binding of target sample to a capture line to enhance the signal to noise ratio, thereby improving reproducibility of specific signal measured.

10. The method of any preceding claim wherein the sample is a fluid sample, comprising blood, plasma, serum, urine, saliva, cerebrospinal fluid, semen, interstitial fluid, organic solvents, aqueous solvents.

11. The method of any preceding claim wherein the sample applied to the device is a crude sample.

12. The method of any one of claims 1 to 10 wherein the sample applied to the device is a filtered sample, which is essentially devoid of particulate matter.

13. The method of any preceding claim wherein the sample is a biological sample.

14. The method of any one of claims 1 to 12 wherein the sample is an environmental sample.
